(19)

Europäisches
Patentamt
European
Patent Office
Office européen
des brevets

(11) **EP 1 990 362 A1**

(12) **EUROPEAN PATENT APPLICATION**

(43) Date of publication:
**12.11.2008 Bulletin 2008/46**

(51) Int Cl.:
**C08L 23/00** *(2006.01)* **C08L 1/02** *(2006.01)*

(21) Application number: **07107857.0**

(22) Date of filing: **09.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Borealis Technology Oy**
**06101 Porvoo (FI)**

(72) Inventors:
• **Eichinger, Dieter**
**8280, Fürstenfeld (AT)**
• **Firgo, Heinrich**
**4840, Vöcklabruck (AT)**

• **Gindl, Wolfgang**
**1200, Wien (AT)**
• **Mathes, Ulf**
**4690, Schwanenstadt (AT)**
• **Suchomel, Friedrich**
**4860, Lenzing (AT)**
• **Gahleitner, Markus**
**4501, Neuhofen/Krems (AT)**
• **Stockreiter, Wolfgang**
**4048, Puchenau (AT)**

(74) Representative: **Brunnbauer, Gerhard**
**Borealis Polyolefine GmbH**
**St.-Peter-Strasse 25**
**4021 Linz (AT)**

(54) **Polyolefin compositions with highly crystalline cellulose regenerate fibers**

(57) The present invention relates to polyolefin compositions comprising man-made cellulose fibers of very high modulus to improve the mechanical performance of said compositions while retaining a low density. The present invention further relates to a melt mixing process with controlled shear intensity and energy input especially suitable for the production of said compositions.

EP 1 990 362 A1

**Description**

The present invention relates to polyolefin compositions comprising man-made cellulose fibers of very high modulus to improve the mechanical performance of said compositions while retaining a low density. The present invention further relates to highly crystalline man-made cellulose fibers of very high modulus produced in a solution spinning process and especially suitable for said compositions. The present invention also relates to a melt mixing process with controlled shear intensity and energy input especially suitable for the production of said compositions.

Prior Art

Polyolefins like polyethylene and polypropylene are important thermoplastic materials being used over a broad variety of applications, but having technical limitations when it comes to applications requiring very high modulus and thermo-mechanical stability. In such cases frequently polyolefin compositions with reinforcing agents are employed in view of the improvements achievable therewith with respect to mechanical properties, such as modulus, impact resistance and heat resistance with or without applied load. Such reinforced polyolefin compositions are used for automotive parts, pipes, profiles, electric and electronic components as well as household articles.

Commonly used reinforcing agents are mostly of inorganic nature like glass fibers or platelets, talc or wollastonite powder, natural or synthetic clay. A common property of all these commonly used inorganic reinforcing agents is the fact that their density is significantly higher than the density of polyolefins, resulting in a density increase for the reinforced polyolefin compositions. Next to this negative effect the inorganic reinforcing agents also are non-combustible, resulting in ash and slag formation in energetic recycling processes. Furthermore, especially glass and mineral fibers commonly used in polyolefin modification cause a deterioration of the surface appearance of the moulded or extruded parts produced from the reinforced polyolefin composition, while practically all inorganic reinforcing agents cause a deterioration of the scratch resistance of said parts. Another problem connected with these reinforcements is the abrasiveness of certain inorganic modifiers - like glass fibers or wollastonite - limiting the lifetime of production and conversion equipment.

It was therefore desirable to find other suitable reinforcing agents not showing these shortcomings. Organic fibers, especially of cellulosic nature, appear to be suitable due to their lower density, complete combustibility and non-thermoplastic nature. Thermoplastic compositions with cellulosic fibres to improve their mechanical strength are generally known from both scientific literature and patents. These can be roughly classified into three categories:

Type 1) Compositions with natural fibres or particles having a low degree of pre-processing (only mechanical treatment) like wood fibres, hemp, flax, jute, sisal, kapok, etc.

Type 2) Compositions with cellulose fibres from thermomechanic or thermochemical processes as applied in the paper or cardboard industry or dissolving pulps as applied in the man-made fiber, ester or ether industry, in which the fibres can come from various sources (hard- or softwood, straw, grass etc.) and be either unbleached or bleached

Type 3) Compositions with man-made cellulose fibres from a spinning process which may come again from a variety of processes (direct solvent spinning, derivative spinning or complex spinning, with technologies like wet spinning or dry-wet spinning).

In case of polyolefins, type 1 compositions are for example described in JP 60158236, where a resin composition containing 20-60wt%, based on 100pts. wt. total composition, vegetable fiber based on fibrous cellulose and 40-80wt%, based on 100pts.wt. total composition, polyolefin resin comprising chemically modified polyolefin obtained by adding a carboxylic acid or anhydride to a polyolefin resin is claimed. Also, in US 4833181 a polyolefin composition comprising (a) polyolefin, (b) vegetable fibers mainly composed of cellulose fibers, and (c) a deodorizer selected from the group consisting of a combination of a metallic soap and an amine antioxidant, activated carbon, zeolite and a phosphorus compound is described. Despite the intense development activity in this segment, polyolefin compositions comprising natural cellulosic fibers have failed to gain general acceptance for a number of reasons being mostly linked to the limited mechanical strength of these fibers as well as the high content of impurities. In the compositions, these factors result in mechanical limitations as well as emission and odor problems, essentially disallowing the use in many sensible technical applications like e.g. automotive interior components. Examples of such emission problems are for example listed by Espert et al. (Polym.Degr.Stab. 90/2005/555-62), where a combination of headspace with a coupling of gas chromatography and mass spectroscopy was used for the analysis.

Type 2 compositions based on polyolefins are described for example in EP 0008143 A1 covering a process for the manufacture of shaped articles from compositions containing 30 to 70% by weight of polyolefine which is a high density polyethylene modified with polar monomers and 30 to 70% by weight of cellulosic fibres which according to the examples in this patent are paper pulp fibers from a thermomechanical fabrication process. These compositions are modified with maleic anhydride at a temperature at least 20°C above the melting point of the polyolefine; the described process is claimed to be applicable to the manufacture of panels which can be used in the automobile industry. Felix and Gateholm (J.Appl.Polym.Sci. 42/1991/609-20) describe paper fibres surface modified with a PP copolymer grafted with maleic anhydride and the effect of this treatment on surface tension; these fibers are described also for use in PP composites for injection moulding. While cellulose fibers from thermomechanic or thermochemical processes as applied in the paper or cardboard industry and dissolving pulps have a better consistency than the natural fibers they are limited in length and especially the pulps for paper and cardboard industry still contain high amounts of hemicellulose and lignin, again resulting in mechanical limitations as well as emission and odor problems as well as discoloration of the related compositions.

The best mechanical performance and lowest emission level can be expected for type 3 compositions based on polyolefins. As an example, Westerlind et al. (J.Appl.Polym.Sci. 29/1984/175-85) have described combinations of high density polyethylene and other polymers with Rayon viscose fibres in a model setup (single-fiber pullout test). Using a rather complicated mixing approach, DE 19506083 A1 describes mixtures of cellulose staple fibres and polypropylene staple fibres from polypropylene modified by the addition of up to 15% maleic anhydride grafted polypropylene to the granulate and being used in the fabrication of composite semi-finished materials.

Compared with other types of man-made cellulose fibers, those spun from an aqueous tertiary amine oxide, for example N-methylmorpholine-N-oxide (NMMO), commonly known as Lyocell process have a high mechanical strength, especially a very high specific tensile modulus. The very small residual lignin content of normally less than 0,08 wt.% and the compact structure are additional factors making these fibres especially suitable for property enhancement of polyolefin compositions. The general concept of using this type of fibers for the modification of polyolefins has been described by Karlsson et al. (Polym.Compos. 17/1996/300-4), who tested single regenerate cellulose fibres spun from NMMO solution and modified with a special surface fibrillation to improve the adhesion as reinforcement for low density polyethylene in a test comprising embedding and pull-out. More recently, Borja et al. (J.Appl.Polym.Sci. 101/2006/364-369) tested Lyocell-type short-cut fibres of 1,3 dtex. 6 mm length and undisclosed mechanical performance in comparison to bleached hardwood pulp fibers of 0,5 mm length as reinforcement for a polypropylene homopolymer. The compositions were produced in melt mixing on a twin-screw extruder in a fiber concentration range of 10 - 30 wt% with the optional addition of maleic anhydride and dicumyl peroxide to improve the compatibility and fiber adhesion. No clear priority in terms of mechanical strength was detected between the two fiber types, for which also the residual fiber length after melt mixing as well as the quality of dispersion were not determined. The fibres used by Borja et al. were produced by Lenzing AG. It is known from literature that Lenzing AG is applying a process which is described in WO 97/14829. Fibres produced by this process are showing a property which is called "natural crimp" which means that they always show a certain crimp and their cross-section is not perfectly round along the whole fibre length. While being mixed with polyolefins their metering and dispersing properties are bad and therefore result in a compound with low mechanical strength.

Beyond the cellulosic fibers spun from an aqueous tertiary amine oxide solution there are other man-made cellulosic fibers showing a high mechanical strength. These can be spun from a solution of cellulose in so-called ionic liquids (WO 03/029329, WO 06/108861). Another type are the polynosic fibres which are produced by making a cellulose xanthogenate like in the viscose process but applying other parameters (US 3,539,679). Yet another type are the HWM fibers which are also produced by making a cellulose xanthogenate like in the viscose process but applying different parameters (US 3,539,678).

Object of the present invention

Accordingly it is the object of the present invention to provide a polyolefin composition, displaying a superior balance of mechanical, in particular tensile and impact properties, while retaining a low density. Preferably, also organoleptic properties should be good, i.e. low volatile emissions. Preferably, also surface quality in injection moulding, blow moulding and extrusion should not deteriorate in reference to the pure polyolefin, and preferably the formation of slag-like residues in combustion or pyrolysis should be avoided as much as possible. This object is reached by combining suitable polyolefin resins with short-cut man-made cellulose fibers of very high modulus and a suitable compatibilizer in a melt compounding process.

Another object of the invention is to provide a melt mixing process with controlled shear intensity and energy input especially suitable for the production of said compositions.

Brief description of the present invention

The present invention shows the above first object by providing the polymer compositions as defined in claim 1. Preferred embodiments are described in claims 2 to 11. The second object of the present invention is specified in claim 12, with preferred embodiments being described in claims 13 to 15. The use of the polymer composition for the preparation of extruded, injection molded and blow molded articles, in particular pipes and fittings as well as automotive and other technical components are defined in claims 16 and 17. Further embodiments of the invention are described in the specification and are illustrated by the examples.

Detailed description of the present invention

The present invention provides a polymer composition, comprising

A) a polyolefin resin,
B) 2-50 wt% of a highly crystalline man-made cellulose fiber and
C) 0,05-10 wt% of a compatibilizer,

being produced in a melt mixing process. The composition may further optionally comprise additives and modifiers commonly used for the stabilization and property enhancement of polyolefins. The central components of the polymer composition in accordance with the present invention are further described below.

Polyolefin resin

The polyolefin resin is selected from polyethylene or polypropylene homo- or copolymers or a mixture of both. Preferably, the polyolefin resin is a highly isotactic polypropylene homopolymer having an isotacticity IRτ above 97% and an MFR (230°C/2,16kg) of 0,1 to 100 g/10 min, preferably 0,3 to 30 g/10min. Alternatively, it is a high-impact polypropylene composition which includes block copolymers, heterophasic compositions in the form of reactor blends as well as blends of polypropylene containing other polymers like polyethylene homo- and copolymers or ethylene-propylene rubbers prepared by compounding, said high-impact polypropylene composition comprising an amorphous content expressed as the content of a fraction soluble in xylene at +23°C (xylene cold soluble fraction) of 2 to 50 wt%, preferably 10 to 30 wt%, and having a melt flow rate (MFR 230°C/2,16kg) of 0,1 to 100 g/10 min, preferably 0,3 to 30 g/10min. Furthermore, it may be a polyethylene homo- or copolymer having a density of more than 930 kg/m$^3$ and a melt flow rate (MFR 190°C/2,16kg) of 0,1 to 100 g/10 min.

Suitable production processes for the mentioned polyolefins are generally known to those skilled in the art. For the production of highly isotactic polypropylene homopolymer single- or multi-stage polymerization processes based on a heterogeneous Ti/Mg type catalyst (Ziegler/Natta type) or a metallocene (single-site) type catalyst can be employed. The catalyst system will normally be complemented by a co-catalyst component and at least one electron donor (internal and/or external electron donor, preferably at least one external donor) controlling the stereoregularity of the produced polymer. Suitable catalysts are in particular disclosed in US 5,234,879, WO 92/19653, WO 92/19658 and WO 99/33843, incorporated herein by reference. Typically the co-catalyst is an Al-alkyl based compound. Preferred external donors are the known silane-based donors, such as dicyclopentyl dimethoxy silane or cyclohexyl methyldimethoxy silane.

High-impact polypropylene compositions can be produced either by melt mixing of a polypropylene homopolymer with an impact modifier like an ethylene-propylene rubber or a polyethylene copolymer having a density of less than 920 kg/m$^3$, in which case the impact modifier will preferably be added in an amount of 5 to 50 wt%, preferably 10-30 wt%. In particular preferred in accordance with the present invention are heterophasic propylene polymer compositions, in particular reactor blends prepared by sequential polymerization, which may be described as propylene polymers comprising a matrix phase comprising a propylene homopolymer and/or a propylene copolymer with at least about 80 wt%. of propylene and up to 20 wt% of ethylene and/or a further α-olefin with 4 to 12, preferably 4 to 8 carbon atoms, and a disperse phase comprising an ethylene rubber copolymer with 20 wt% or more of ethylene and up to 80 wt% of propylene and/or a further α-olefin with 4 to 12, preferably 4 to 8 carbon atoms. The preferred comonomer for the matrix phase is ethylene or 1-butene, in particular ethylene, while the preferred comonomer for the dispersed phase is propylene. Accordingly the dispersed phase can be described as an ethylene-propylene-rubber (EPR).

The composition of the high-impact polypropylene composition to be employed in accordance with the present invention, i.e. the relative amounts of matrix phase and dispersed phase, and its further properties, such as melt-flow rate, comonomer content, comonomer distribution, molecular weight distribution etc. may be selected in accordance with the desired end application. Typically however the matrix phase amounts to 50 to 98 wt% of the heterophasic composition and the dispersed phase amounts to 2 to 50 wt% of the heterophasic composition. Suitable ranges are also 70 to 95, preferably 75 to 85 wt% matrix phase and 5 to 30, preferably 15 to 25 wt% dispersed phase. The amount of dispersed phase, i.e. elastomer content, may be determined in accordance with procedures known to the skilled person, such as determining the xylene soluble fraction at 23°C. Representative examples of such high impact copolymers to be employed in accordance with the present invention are disclosed in the European Patent Applications of Borealis TOy, such as EP 1354901 A1, EP 1344793 A1 and EP 1702956 A2, incorporated herein by reference.

Polyethylene homo- or copolymers produced by a single- or multistage process by polymerisation of ethylene using alpha-olefins like 1-butene, 1-hexene or 1-octene as comonomers for density regulation. Preferably, a multi-stage process is applied in which both the molecular weight and the comonomer content can be regulated independently in the different polymerisation stages. The different stages can be carried out in liquid phase using suitable diluents and/or in gas phase at temperatures of 40 - 110 °C and pressures of 10 to 100 bar. A suitable catalyst for such polymerisations is either a Ziegler-type titanium catalyst or a single-site catalyst in heterogeneous form. Representative examples of such polyethylene production processes are for example described in EP 1655339 A1.

Highly crystalline man-made cellulose fiber

The highly crystalline man-made cellulose fiber is a fiber having a crystallinity as determined in wide-angle X-ray diffraction (WAXD) of at least 35% and a tensile modulus of at least 10 GPa, preferably at least 15 GPa. A preferred production process for these fibers is a direct solvent dry-wet spinning process. This process may be a process using an aqueous tertiary amine oxide, for example N-methylmorpholine-N-oxide (NMMO), as solvent and is commonly known as Lyocell process, the resulting fibers having a titer of 0,5 to 15 dtex, preferably 1 to 5 dtex. These fibers are preferably used as short-cut fibers of 5 to 50 $\mu$m, preferably 10 to 20 $\mu$m diameter and 2 to 10 mm, preferably 3 to 7 mm length, resulting in a length to diameter (L/D) ratio or anisoptropy factor of 40 to 2000, preferably 150 to 700.

Suitable production processes for such fibers are for example described in WO 94/28220, US 5,362,867, US 6,677,447 and WO 97/47790.

Another suitable process is a process using a so-called "ionic liquid" solvent (WO 03/029329, WO 06/108861). Even further suitable processes are the so-called polynosic process (US 3,539,679) and the HWM (High-Wet-Modulus) viscose process (US 3,539,678).

Especially preferred are uncrimped fibers. This means that they are produced without a crimping step, for example without process steps comparable to a commonly known stuffer-box crimp process or to WO 97/14829. Surprisingly it was found that these uncrimped fibers can be added to the polyolefin melt more easily and are more evenly dispersed in the melt which results in improved mechanical strength of the compound. Wether a commercially available fiber is crimped or uncrimped can be easily determined by using a light microscope or the method explicitly described in WO 97/14829.

Compatibilizer

The compatibilizer is selected from polar modified polyolefins being produced by reactive coupling of polar organic components to a polyolefin resin or wax. A typical example of a compatibilizer is a polypropylene or polyethylene homo- or copolymer grafted with functional groups, in particular acid groups and/or acid anhydride groups. Characteristic examples are polypropylenes grafted with maleic anhydride or acrylic acid in an amount of 0,1 to 10 mol%, preferably 0,5 to 5 mol%. These additives may be employed in usual amounts and typically these amounts will be proportional to the cellulose fiber content. Typical amounts will be 2 to 20 % , preferably 3 to 10 %, of the mass content of cellulose fibers in wt%. In case of a cellulose fiber content of 2 to 50 wt% this means an amount of compatibilizer of 0,04 to 10 wt%, preferably 0,06 to 5 wt%.

Melt mixing process

The polymer composition in accordance with the present invention may be prepared by compounding the components within suitable melt mixing devices for preparing polymeric compounds, including in particular extruders single screw extruders as well as twin screw extruders. Other suitable melt mixing devices include planet extruders and single screw co-kneaders. The machine configuration and process parameters are dependent on the components to be compounded in detail but have to be controlled in such a way that the final fiber length of the added cellulose fibers is above 300 $\mu$m, preferably above 500 $\mu$m. For achieving this as well as minimizing discoloration of the reinforced polyolefin composition it is preferred to keep the melt temperature in the mixing process at or below 240°C, preferably at or below 220°C. A further measure to reduce fiber damage is the use of a side or top feeder downstream of the main hopper of the extruder to feed the cellulose fibers.

The dispersion quality of the melt mixing process can be controlled by rheological measurements similar to the procedures described by Gahleitner et al. (J.Appl.Polym.Sci. 53/1994/283-289) for the case of mineral reinforced polypropylene compounds. A good degree of dispersion combined with a high final fiber length results in the development of a secondary plateau of the storage modulus G' as determined from dynamic-mechanical measurements (ISO 6721-10-1999). This "network effect" can be expressed by the ratio between G' and G" at low frequencies; for evaluating the compounding quality of the compositions according to the present invention this ratio was defined at 0,05 rad/s at a temperature of 230°C. Good compounds were found to have a G'/G" ratio of above 0,1 at these conditions.

Optional additives and modifiers

Optionally added suitable additives and modifiers include processing-, long-term-heat- and UV stabilizers, nucleating agents, mineral fillers etc. not exceeding an overall content of 5 wt%.

Applications

The polyolefin compositions comprising man-made cellulose fibers of very high modulus according to this invention may be used preferably for the preparation of extruded, injection molded and blow molded articles, in particular pipes and fittings as well as automotive and other technical components.

Examples

The present invention will now be further described with reference to the following non-limiting examples and comparative examples.

The highly crystalline man-made cellulose fibers and compatibilizers as indicated in table 1 were compounded with a high isotacticity polypropylene homopolymer (HD601CF) and a high impact propylene ethylene copolymer (BG055Al). In addition to the examples 1 to 6 also the comparative examples 2 and 3 were prepared to demonstrate the mechanical advantages of the polyolefin compositions according to the invention, while comparative example 1 is identical with one of the base polymers (BG055Al). Table 1 is complemented by MFR and density values for all prepared compositions, while table 2 presents the results of the mechanical characterization of said compositions.

All compositions were prepared using a PRISM TSE 24 twin screw extruder. For examples 1 and 2 as well as for comparative example 3 an extended barrel version of the machine with an L/D ratio (barrel length divided by screw diameter) of 20:1 was used, allowing three sets of kneading blocks in the screw configuration. For examples 3 to 6 as well as for comparative example 2 the standard barrel length of the machine with an L/D ratio of 30:1 was used, allowing two sets of kneading blocks in the screw configuration. A side feeder downstream of the main hopper of the extruder was used to feed the cellulose fibers. It can be noted from table 1 that the lower mixing intensity allowed a higher final fiber length. The melt mixing was performed with a melt temperature profile between 180 and 220°C to limit discoloration of the fibers. The extrusion was followed by cooling and solidifying the extrudate in a water bath below ambient temperature followed by strand pelletizing.

Components:

- HD601CF (commercially available from Borealis Polyolefine GmbH, Austria) is a polypropylene homopolymer having an MFR (230°C/2,16kg) of 8 g/10 min and an isotacticity determined as IRτ of 98% and a density of 905 kg/m$^3$.
- BG055Al (commercially available from Borealis Polyolefine GmbH, Austria) is a nucleated high crystallinity PP impact copolymer having an MFR (230°C/2,16kg) of 22 g/10min, an elastomer content of 18 wt% as determined by the content of xylene solubles (XS) and a density of 902 kg/m$^3$.
- Scona TPPP 2112FA (commercially available from Kometra GmbH, Germany) is a maleic anhydride (MAH) grafted PP homopolymer having an MFR (190°C/2,16kg) of 5 g/10min and an MAH content of 1,2 mol%.
- LC H415 857 (commercially available from Lenzing AG, Austria) is a short cut non-crimped TENCEL fiber from a Lyocell process having a titer of 2,3 dtex (corresponding to a fiber diameter of 18 μm) and a length of 5 mm. Before cutting, the fiber modulus was determined according to Lenzing Standard TIPQA 03/06 at 20 GPa and the fiber has a WAXD crystallinity of 42%.
- LC H405 821 (commercially available from Lenzing AG, Austria) is a short cut nonn-crimped TENCEL fiber from a Lyocell process having a titer of 2,5 dtex (corresponding to a fiber diameter of 15 μm) and a length of 3 mm. Before cutting, the fiber modulus was determined according to Lenzing Standard TIPQA 03/06 at 20 GPa and the fiber has a WAXD crystallinity of 42%.
- Luzenac A7 (commercially available from Luzenac SA, France) is a jet-milled talc having a top-cut particle size of 7 μm (95% of particles below that size, according to ISO 787-7) and a weight average particle size of 2 μm as determined according to ISO 13317-1.
- The pulp fibre used in comparative example 3 is a conventional lignocellulose fiber of 0,5 mm weight average length and an average fiber diameter of 15 μm.

The following test methods were employed to determine the properties of the materials in tables 1 and 2:

- Melt flow rate (MFR): Determined according to ISO 1133 at 230°C with a load of 2,16 kg.
- Density: Determined according to ISO 1183 on compression moulded specimens.
- Isotacticity: The isotacticity IRτ of a propylene polymer is determined by Infrared spectroscopy and calculated as described in EP 0 277 514 A2 on page 3 (especially column 3, line 37 to column 4, line 30) and page 5 (column 7, line 53 to column 8, line 11).

- Xylene solubles (XS) content: For the determination of the XS fraction, 2.0 g of polymer is dissolved in 250 ml of p-xylene at 135°C under stirring. After $30 \pm 2$ min the solution is allowed to cool for 5 min at ambient temperature and then allowed to settle for 30 min at $23 \pm 0.5$°C. The solution is filtered with a paper filter into two 100 ml flasks. The solution in the first 100 ml flask is evaporated in nitrogen flow and the residue is dried under vacuum at 90°C until constant weight is reached. The xylene soluble (XS) fraction is then calculated using the following equation:

$$XS \, [\%] = (100 \, m_1 \, v_0) \, / \, (m_0 \, v_1)$$

wherein $m_0$ is the initial polymer amount [g], $m_1$ is the weight of the residue [g], $v_0$ is the initial volume [ml] and $v_1$ the volume of the analysed sample [ml].

- Fiber modulus: Determined on dry single fibers according to Lenzing Standard TIPQA 03/06 using a Vibrodyn tester with 50 mg preload.
- $R_{18}$-value: Determined according to ISO 699-1982 with aqueous sodium hydroxide solution.
- Fiber crystallinity: The fiber crystallinity was determined by wide-angle X-Ray diffractometry according to Ruland (Acta Crystallographica 14/1961/1180-1185) and Vonk (J.Appl.Crystallography 6/1973/148-152).
- Modulus ratio G'/G" at 0,05 rad/s and 230°C: A standard rheological characterization in melt state at 230°C was carried out in dynamic-mechanical mode and plate-plate geometry according to ISO 6721-10-1999, starting from compression moulded plaques and using a frequency sweep from 400 to 0,001 rad/s. The ratio was calculated from the storage modulus G' and the loss modulus G" at a frequency of 0,05 rad/s.
- Tensile test: All parameters determined according to ISO 527, determined on dog-bone shape injection molded specimens of 4 mm thickness as described in EN ISO 1873-2.
- Flexural modulus: Determined according to ISO 178 on injection molded specimens of 80x10x4 mm$^3$. The normalized modulus is calculated as the ratio of flexural modulus and density.
- Charpy Impact strength: Determined according to ISO 179 1eU on injection molded specimens of 80x10x4 mm$^3$.
- Heat deflection temperature (HDT): Determined according to ISO 75 B with a load of 0,45 MPa on injection molded specimens of 80x10x4 mm$^3$.
- Volatiles content (headspace analysis): Determined in accordance with VDA277 at 120°C with a heating time of 5 hours, emissions being recorded with a combination of gas chromatography and mass spectroscopy. Only the overall emissions in $\mu$g carbon per gram sample ($\mu$gC/g) were recorded.

Table 1 - Composition, final cellulose fiber length, MFR and density of examples 1-6 and comparative examples 1-3
(compatibilizer type: Scona TPPP 2112 FA)

| Number | Base PP | Filler type | amount | length | Compatibiliser * | MFR 230°C/ 2,16kg | Density - | G'/G" 0,0 5 rad/s |
|---|---|---|---|---|---|---|---|---|
| | grade | - | wt% | $\mu$m | wt% | g/10min | kg/m$^3$ | - |
| EX 1 | HD601CF | LC H415 857 | 15 | 850 | 2,5 | 4,16 | 950 | 0,208 |
| EX 2 | HD601CF | LC H405 821 | 15 | 660 | 2,5 | 3,87 | 950 | 0,220 |
| EX 3 | BG055AI | LC H405 821 | 15 | 2110 | 3 | 5,84 | 955 | 0,279 |
| EX 4 | BG055AI | LC H405 821 | 15 | 1790 | 3 | 7,55 | 955 | 0,233 |
| EX 5 | BG055AI | LC H415 857 | 10 | 2060 | 2,5 | 8,22 | 940 | 0,256 |

(continued)

| Number | Base PP | Filler type | amount | length | Compatibiliser * | MFR 230°C/ 2,16kg | Density - | G'/G" 0,0 5 rad/s |
|---|---|---|---|---|---|---|---|---|
| | grade | - | wt% | µm | wt% | g/10min | kg/m³ | - |
| EX 6 | BG055AI | LC H415 857 | 30 | 1620 | 4 | 4,85 | 996 | 0,311 |
| CE 1 | BG055AI | none | 0 | - | 0 | 22 | 920 | 0,072 |
| CE 2 | BG055AI | Luzen ac A7 | 15 | - | 0 | 17,2 | 1040 | 0,085 |
| CE 3 | BG055AI | pulp fibre | 15 | 150 | 2,5 | 7,2 | 950 | 0,098 |

Table 2 - Mechanical properties of examples 1-6 and comparative examples 1-3 (n.d. - not determined)

| Number | Tensile test | | | Flexural test | | Charpy ISO 179 1eU | | HDT |
|---|---|---|---|---|---|---|---|---|
| | Modulus | Ext.Break | Str.Break | Modulus | normalized | + 23°C | - 20°C | ISO75B |
| | MPa | % | MPa | MPa | $10^3$ m²/s² | kJ/m² | kJ/m² | °C |
| EX 1 | 2686 | 7,3 | 44,2 | 2494 | 2625 | 36,8 | 24 | 142 |
| EX 2 | 2680 | 7,2 | 43 | 2482 | 2612 | 34,9 | 22,1 | 136 |
| EX 3 | 2846 | 7,3 | 44,2 | 2705 | 2832 | 36,8 | 24 | 142 |
| EX 4 | 2791 | 7,2 | 43 | 2610 | 2733 | 34,9 | 22,1 | 136 |
| EX 5 | 2338 | 8,4 | 40,5 | 2350 | 2500 | 36,4 | 22,4 | 144 |
| EX 6 | 2701 | 5,4 | 47,8 | 2575 | 2585 | 39,5 | 19,3 | 149 |
| CE 1 | 1850 | 11,4 | 26,3 | 1800 | 1957 | 102 | 35 | 108 |
| CE 2 | 2620 | 10,6 | 27,6 | 2440 | 2346 | 32,5 | 17,2 | 116 |
| CE 3 | n.d. | n.d. | n.d. | 2310 | 2432 | 22,5 | 10,3 | 119 |

It can clearly be seen from these results that the polyolefin compositions comprising man-made cellulose fibers of very high modulus according to this invention demonstrate significantly improved mechanical performance while retaining a low density. More specifically it can be seen that the normalized flexural modulus of said compositions is higher than 2500. $10^3$ m²/s² in all cases and that the heat deflection temperature (HDT, ISO 75B) is above 120°C in all cases. Furthermore it was found that the content of volatiles determined in a headspace test at 120°C was less than 35 µgC/g for examples EX3 and EX4, thus being below the level of 50 µgC/g for comparative example CE1.

**Claims**

1.  A polymer composition, comprising

    A) a polyolefin resin selected from the group consisting of polyethylene, polypropylene homo- and copolymers and mixtures thereof,
    B) 2-50 wt% of a highly crystalline man-made cellulose fiber and
    C) 0,05-10 wt% of a compatibilizer,

    said composition being produced in a melt mixing process.

2.  Polymer composition according to claim 1, **characterized in that** the polyolefin resin is a polypropylene homopolymer having an isotacticity IRτ above 97% and an MFR (230°C/2,16kg) of 0,1 to 100 g/10 min.

3.  Polymer composition according to claim 2, **characterized in that** the polypropylene homopolymer has an MFR (230°C/2,16kg) of 0,3 to 30 g/10min.

4. Polymer composition according to one of claims 1-3, **characterized in that** the polyolefin resin comprises a propylene copolymer comprising an amorphous content expressed as the content of a fraction soluble in xylene at +23°C (xylene cold soluble fraction) of 2 to 50 wt% and has an MFR (230°C/2,16kg) of 0,1 to 100 g/10 min.

5. Polymer composition according to claim 4, **characterized in that** the propylene copolymer comprises an amorphous content expressed as the content of a fraction soluble in xylene at +23°C (xylene cold soluble fraction) of 10 to 30 wt% and has an MFR (230°C/2,16kg) of 0,3 to 30 g/10min.

6. Polymer composition according to claim 1, **characterized in that** the polyolefin resin is a polyethylene homo- or copolymer having a density of more than 930 kg/m$^3$ and a melt flow rate (MFR 190°C/2,16kg) of 0,1 to 100 g/10 min.

7. Polymer composition according to one of the claims 1 to 6, **characterized in that** the highly crystalline man-made cellulose fiber is a solution spun fiber having a crystallinity of at least 35%, a tensile modulus of at least 10 GPa and a titer of 0,5 to 15 dtex.

8. Polymer composition according to claim 7, **characterized in that** the highly crystalline man-made cellulose fiber has a tensile modulus of at least 15 GPa, and a titer of 1 to 5 dtex.

9. Polymer composition according to one of the claims 1 to 8, **characterized in that** the compatibilizer is a polypropylene or polyethylene homo- and/or copolymer grafted with functional groups, in particular carboxylic acid groups and/or carboxylic acid anhydride groups.

10. Polymer composition according to one of the claims 1 to 9, **characterized in that** the compatibilizer is a polypropylene homo- and/or copolymer grafted with maleic anhydride and/or acrylic acid in an amount of 0,1 to 10 mol%.

11. Polymer composition according to one of the claims 1 to 10, **characterized in that** the weight average fiber length of the cellulose fibers in the composition is more or equal than 300 $\mu$m and that the composition has a good compounding quality defined by the ratio between storage modulus G' and loss modulus G" at 0,05 rad/s at a temperature of 230°C being above 0,1.

12. Process for preparing a polymer composition comprising mixing

  A) a polyolefin resin selected from the group consisting of polyethylene, polypropylene homo- and copolymers and mixtures thereof,
  B) 2-50 wt% of a highly crystalline man-made cellulose fiber and
  C) 0,05-10 wt% of a compatibilizer

  in a suitable melt mixing device and melting the mixture, whereby the mixing and/or melting conditions are chosen such that the weight average fiber length of the cellulose fibers in the composition is more or equal than 300 $\mu$m.

13. Melt mixing process according to claim 12, **characterized in that** a twin screw extruder or co-kneader is applied with side or top feeder downstream of the main hopper of the extruder to feed the cellulose fibers as short cut fibers with a fiber diameter of 5 to 50 $\mu$m and a length of 2 to 10 mm.

14. Melt mixing process according to claims 12 or 13, **characterized in that** the melt temperature in the mixing process is maintained at or below 240°C.

15. Melt mixing process according to one of the claims 12 to 14, **characterized in that** the resulting polyolefin composition has a good compounding quality defined by the ratio between storage modulus G' and loss modulus G" at 0,05 rad/s at a temperature of 230°C being above 0,1.

16. Use of polyolefin compositions comprising man-made cellulose fibers according to one of the claims 1 to 11 for the preparation of extruded, injection molded or blow molded articles.

17. Use of polyolefin compositions comprising man-made cellulose fibers according to one of the claims 1 to 11 for the preparation of extruded pipes, injection moulded fittings, automotive components or other technical articles.

**European Patent Office**

## PARTIAL EUROPEAN SEARCH REPORT

which under Rule 45 of the European Patent Convention shall be considered, for the purposes of subsequent proceedings, as the European search report

Application Number

EP 07 10 7857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | DE 195 06 083 A1 (THUERINGISCHES INST TEXTIL [DE]) 13 July 1995 (1995-07-13) * the whole document * | 7-11,16, 17 | INV. C08L23/00 C08L1/02 |
| A | EP 1 364 760 A (BOREALIS TECH OY [FI]) 26 November 2003 (2003-11-26) * paragraphs [0016] - [0023], [0035]; claim 1; examples 1-5 * | 7-11,16, 17 | |
| A | KUMAR A P ET AL: "Degradability of composites, prepared from ethylene-propylene copolymer and jute fiber under accelerated aging and biotic environments" MATERIALS CHEMISTRY AND PHYSICS, ELSEVIER, vol. 92, no. 2-3, 15 August 2005 (2005-08-15), pages 458-469, XP004859827 ISSN: 0254-0584 * the whole document * | 7-11,16, 17 | |

TECHNICAL FIELDS SEARCHED (IPC)

C08L

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 12 October 2007 | Van Golde, Lambertus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent**
**Office**

INCOMPLETE SEARCH
SHEET C

Application Number

EP 07 10 7857

Claim(s) searched completely:
7,8

Claim(s) searched incompletely:
9-11,16,17

Claim(s) not searched:
1-6,12-15

Reason for the limitation of the search:

1. The term highly crystalline man-made cellulose fiber is unclear.

2. Claims 1 to 6 and 12 to 15 do not comprise a further definition of this term.

3. Therefore the Claims 1 to 6 and 12 to 15 as a whole and the Claims 9 to 11, 16 and 17 as far as they are not limited to the highly crystalline man-made cellulose fiber having the definition of Claim 7 do not comply with the requirements of Article 84 EPC.

4. For these reasons the search is limited to the full subject matter of the Claims 7 and 8 and the subject matter of the Claims 9 to 11, 16 and 17 as far as they are limited to the highly crystalline man-made cellulose fiber having the definition of Claim 7.

**ANNEX TO THE EUROPEAN SEARCH REPORT
ON EUROPEAN PATENT APPLICATION NO.**                     EP 07 10 7857

This annex lists the patent family members relating to the patent documents cited in  the above-mentioned European search report.
The members are as contained in the European Patent Office EDP file on
The European Patent Office is in no way liable for these particulars which are merely given for the purpose of information.

12-10-2007

| Patent document cited in search report | | Publication date | Patent family member(s) | Publication date |
|---|---|---|---|---|
| DE  19506083 | A1 | 13-07-1995 | NONE | |
| EP  1364760 | A | 26-11-2003 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60158236 B
- US 4833181 A
- EP 0008143 A1
- DE 19506083 A1
- WO 9714829 A
- WO 03029329 A
- WO 06108861 A
- US 3539679 A
- US 3539678 A
- US 5234879 A
- WO 9219653 A

- WO 9219658 A
- WO 9933843 A
- EP 1354901 A1
- EP 1344793 A1
- EP 1702956 A2
- EP 1655339 A1
- WO 9428220 A
- US 5362867 A
- US 6677447 B
- WO 9747790 A
- EP 0277514 A2

**Non-patent literature cited in the description**

- **FELIX ; GATEHOLM.** *J.Appl.Polym.Sci.,* 1991, vol. 42, 609-20
- **WESTERLIND et al.** *J.Appl.Polym.Sci.,* 1984, vol. 29, 175-85
- **KARLSSON et al.** *Polym.Compos.,* 1996, vol. 17, 300-4

- **BORJA et al.** *J.Appl.Polym.Sci.,* 2006, vol. 101, 364-369
- **GAHLEITNER et al.** *J.Appl.Polym.Sci.,* 1994, vol. 53, 283-289